# EUROPÄISCHE PATENTSCHRIFT

(11) **EP 1 616 372 B1**
(45) Veröffentlichungstag und Bekanntmachung des Hinweises auf die Patenterteilung: **24.06.2009**
(21) Anmeldenummer: 04728122.5
(22) Anmeldetag: 17.04.2004
(51) Int. Cl.: H01R 13/03

(54) **ELEKTRISCHE STECKKONTAKTE UND EIN HALBZEUG FÜR DEREN HERSTELLUNG**
ELECTRICAL PLUG CONTACTS AND A SEMI-FINISHED PRODUCT FOR THE PRODUCTION THEREOF
CONTACTS POUR FICHE ELECTRIQUE ET PRODUIT SEMI-FINI UTILISE POUR LES PRODUIRE

(30) Priorität: 17.04.2003 DE 10318890
(43) Veröffentlichungstag der Anmeldung: 18.01.2006
(73) Patentinhaber: AMI DODUCO GmbH, 75181 Pforzheim (DE); Wieland-Werke AG, 89070 Ulm (DE)
(72) Erfinder: KASPAR, Franz, 75223 Niefern-Öschelbronn (DE); GANZ, Joachim, 75399 Kapfenhardt (DE); BURESCH, Isabell, 89257 Illertissen (DE)
(74) Vertreter: Twelmeier Mommer & Partner
(86) Internationale Anmeldenummer: PCT/EP2004/004100
(87) Internationale Veröffentlichungsnummer: WO 2004/093256

(56) Entgegenhaltungen:
- EP-A- 0 311 134
- EP-A- 0 825 682
- WO-A1-94/19814
- DE-A- 3 806 573
- DE-A- 10 045 783
- US-A- 5 967 860
- US-A1- 2001 024 895
- DATABASE WPI Week 198716, Derwent Publications Ltd., London, GB; Class L03, AN 1987-112521 & JP 62 058524 A (NIPPON OIL SEAL IND CO LTD) 14 März 1987

## Beschreibung

Die Erfindung betrifft ein Halbzeug für die Herstellung von Kontakten. Ein Halbzeug mit den im Oberbegriff des Anspruchs 1 angegebenen Merkmalen ist aus der JP 62 058 524 A und der Database WPI Week 198716 Thomson Scientific, Londin, GB bekannt.

Die Erfindung betrifft elektrische Steckkontakte für Steckverbinder in elektrischen Gleichstromnetzen, die mit einer Nennspannung betrieben werden, bei welcher Lichtbögen entstehen können, sowie ein Halbzeug für die Herstellung solcher Steckkontakte. Insbesondere geht es um Steckkontakte, welche in Automobilen verwendet werden sollen. Personenkraftwagen haben heute durchweg elektrische Bordnetze, welche bei 14 Volt Nennspannung betrieben werden. Steckkontakte in Steckverbindern für diesen Verwendungszweck bestehen üblicherweise aus einem Grundkörper aus Kupfer, aus einer Kupferbasislegierung wie zum Beispiel CuNiSi oder aus Edelstahl, welche die gewünschte elektrische Leitfähigkeit und Federeigenschaft für eine sichere Kontaktgabe des Steckverbinders zur Verfügung stellen. Um auch in korrosiver Atmosphäre stabile elektrische Kontakteigenschaften zu gewährleisten, ist es bekannt, die Grundkörper der Steckkontakte oder von deren Halbzeugen durch ein galvanisches Abscheideverfahren mit einer Hartgoldschicht oder mit einer Reinsilberschicht oder mit einer Zinnschicht zu versehen. Schichten aus Zinn und Zinnlegierungen werden häufig auch nach einem Verfahren der Feuerverzinnung aufgebracht. Damit läßt sich unter den bisher geforderten Randbedingungen (Einsatz in Luft bei 14 Volt Nennspannung und einer maximalen Umgebungstemperatur von 150°C, wobei die Temperatur des Steckverbinders durch Stromerwärmung noch um 30°C über die Umgebungstemperatur steigen kann) eine hinreichende Beständigkeit gegen Verschleiß beim Stecken und Ziehen der männlichen und weiblichen Steckkontakte erreichen.

Automobilhersteller planen, die Bordnetzspannung in Personenkraftwagen künftig auf 42 Volt heraufzusetzen. In Gleichstrom-Bordnetzen mit einer Nennspannung von 42 Volt treten beim Stecken und Ziehen von Steckverbindern unter Last Lichtbögen auf, die zum Abbrand der Steckkontakte bis hin zum Fahrzeugbrand führen können. Darüber hinaus kann es durch Erschütterungen, die im Fahrbetrieb auftreten, in den Steckverbindern zu Mikrounterbrechungen zwischen den Steckkontakten kommen, die ebenfalls Lichtbögen nach sich ziehen können. Ob ein Lichtbogen über einem bei Vibrationen oder beim Stecken oder Ziehen eines Steckers entstehenden Spalt zwischen zwei Kontaktoberflächen tatsächlich zündet, hängt nicht nur von der zur Verfügung stehenden elektrischen Spannung ab, sondern auch davon, ob eine kapazitive Last oder eine induktive Last getrennt wird und aus welchem Material die beteiligten Kontaktoberflächen bestehen. Für alle Materialien gibt es eine physikalisch bedingte Minimalspannung, die notwendig ist, um Ladungsträger aus der Kontaktoberfläche zu reißen und mit ihnen den Lichtbogen zu versorgen. Das Element mit der höchsten Lichtbogen-Brennspannung ist Kohlenstoff mit einer Brennspannung von 20 Volt; alle Metalle haben Brennspannungen zwischen 12 Volt und 16 Volt. Im PKW-Bordnetzen mit 14 Volt Nennspannung kommt es beim Trennen eines Steckverbinders unter Last noch nicht zur Ausbildung eines dauerhaft brennenden Lichtbogens, da der Lastwiderstand im vorher geschlossenen Stromkreis einen Spannungsabfall bewirkt, so dass an dem Spalt, der beim Trennen eines Steckverbinders zwischen den beteiligten Kontaktoberflächen gebildet wird, die erforderliche Lichtbogen-Brennspannung nicht erreicht wird. In heutigen Personenkraftwagen sind Kontaktoberflächen deshalb nicht auf Lastfälle ausgelegt, bei denen Lichtbögen entstehen können.

Die Fachwelt weiß um das Problem, dass in 42V-Bordnetzen beim Trennen von Steckverbindern Lichtbögen entstehen können, die zu schwerwiegenden Schäden bis hin zum Fahrzeugbrand führen können und geeignet sind, die Sicherheit der Fahrzeuginsassen zu gefährden. Die Fachwelt ist sich auch bewußt, dass es nötig sein wird, das gesamte elektrische Bordnetz und seine Komponenten auf die Anforderungen einer Nennspannung von 42 Volt neu auszulegen und dass das erheblicher Entwicklungsanstrengungen auch zur Umgestaltung von Steckverbindern und Schaltgeräten bedarf, siehe zum Beispiel den Aufsatz von Thomas J. Schöpf, "Electrical Contacts in the Automotive 42 VDC PowerNet", Proceedings of the 21 st International Conference on Electrical Contacts, 9. bis 12.09.2002 in Zürich, Seiten 43 bis 55, insbesondere Seite 52. Dieser Aufsatz gibt Anregungen, sich mit Mitteln zur Lichtbogenlöschung zu befassen.

Der Aufsatz von N. Ben Jamaa et al. "Short Arc Duration Laws and Distribution at Low Current (<1A) and Voltage (14-42VDC)", Proceedings of 20th International Conference on Electrical Contacts, 19. bis 23.06.2000 in Stockholm, Seiten 379 bis 383, berichtet über Untersuchungen der Lichtbogenbrenndauer auf Kontaktoberflächen aus Ag, Au, Cu, Pd, Sn, Ni und Stahl, von denen Palladium die kürzeste und Zinn die längste Lichtbogenbrenndauer zeigte. Palladium ist jedoch sehr teuer und sein Einsatz für Steckverbinder in der Automobiltechnik deshalb unwirtschaftlich. Die anderen Materialien sind, wie eingangs erwähnt, als Kontaktoberflächen bei Steckverbindungen für 14V-Bordnetze in heutigen Automobilen bekannt, für den Einsatz in 42V-Bordnetzen aber unzureichend qualifiziert.

Ein weiteres Problem besteht darin, dass Lichtbögen, die in 42V-Bordnetzen entstehen können, die Kontaktoberfläche verändern und zu einem höheren Kontaktübergangswiderstand, damit zu einer unerwünschten Kontakterwärmung, unter Umständen sogar zu einem Verschweißen von Steckkontakten führen können, so dass sich diese nicht mehr trennen lassen.

Ein Halbzeug mit den Merkmalen des Oberbegriffs des Anspruchs 1 ist aus der US 5,967,860 A bekannt. Die bekannten Steckkontakte haben einen Grundkörper aus Kupfer oder Edelstahl und darauf eine z. B. 0,95 µm dicke Nanokomposit-Beschichtung aus Silber mit Nickel und Graphit, welche elektrolytisch abgeschieden wird. Über dieser Silber-Nickel-Graphit-Schicht befindet sich vorzugsweise noch eine elektrolytisch abgeschiedene, dünne Silberschicht. Im Falle von Steckkontakten mit einem Grundkörper aus Kupfer befindet sich zwischen diesem und der Silber-Nickel-Graphit-Schicht noch eine Zwischenschicht aus Nickel.

Der vorliegenden Erfindung liegt die Aufgabe zugrunde, elektrische Steckkontakte sowie ein Halbzeug für deren Herstellung zu schaffen, welche sich unter den in 42V-Bordnetzen zu erwartenden Beanspruchungen durch Lichtbögen günstiger verhalten als bekannte Halbzeuge und Steckkontakte, die für 14 Volt Nennspannung ausgelegt sind, und welche den nachstehend aufgeführten Randbedingungen genügen, die für den Einsatz in 42V-Bordnetzen aufgestellt worden sind:
- Ihr Grundkörper soll einerseits eine Federhärte aufweisen, welche in elektrischen Steckverbindungen eine zuverlässige Kontaktgabe ermöglicht.
- Andererseits soll der Grundkörper hinreichend duktil sein, um ihn verformen zu können, insbesondere durch Biegen.
- Steckverbinder, die mit solchen Steckkontakten hergestellt sind, sollen wiederholt unter Last getrennt und wieder zusammengefügt werden können, ohne miteinander zu verschweißen.
- Steckverbinder, die mit solchen Steckkontakten hergestellt sind, sollten wiederholt unter Last getrennt und wieder zusammengefügt werden können, ohne dass der Kontaktübergangswiderstand zu stark ansteigt. Insbesondere darf sich eine aufgebrachte Kontaktschicht auch nach wiederholtem Trennen und wieder Zusammenfügen der Steckverbindung nicht abreiben. Eine für den Einsatz in Automobilen typische Anzahl von Steckvorgängen soll ohne Versagen möglich sein.
- Die Steckkontakte müssen für den Einsatz bei Umgebungstemperaturen bis 200°C geeignet sein.
- Die Steckkontakte und das Halbzeug für ihre Herstellung müssen preiswert sein.

Diese Aufgabe wird gelöst durch ein Halbzeug mit den im Patentanspruch 1 angegebenen Merkmalen, durch ein Verfahren gemäß Patentanspruch 11 zu seiner Herstellung sowie durch daraus hergestellte Steckkontakte mit den im Patentanspruch 9 angegebenen Merkmalen. Vorteilhafte Weiterbildungen der Erfindung sind Gegenstand der Unteransprüche.

Die Erfindung hat wesentliche Vorteile:
◆ Durch die Verwendung eines Grundkörpers aus einem unedlen Material und einer Beschichtung, welche für die elektrische Kontaktgabe in Steckverbindern günstige Eigenschaften hat, lassen sich sowohl die mechanischen als auch die elektrischen Anforderungen erfüllen.
◆ Dadurch, dass die für die elektrische Kontaktgabe vorgesehene Beschichtung auf der Grundlage von Silber oder auf der Grundlage einer Silberbasislegierung gebildet wird, wobei reines Silber bevorzugt ist, weil es einen höheren Schmelzpunkt hat, sind Kontaktoberflächen mit hinreichend niedrigem Kontaktübergangswiderstand und mit hinreichender Korrosionsfestigkeit erhältlich. Ein niedriger Kontaktübergangswiderstand ist günstig für eine geringe Erwärmung der Steckkontakte in einem Steckverbinder. Die gute Korrosionsbeständigkeit ist günstig für einen dauerhaft niedrigen Kontaktübergangswiderstand.
◆ Reines Silber wäre als kontaktgebende Beschichtung im Hinblick auf die in 42V-Bordnetzen mögliche Lichtbogenbelastung ungünstig. Um so überraschender ist, dass bereits dünne Schichten aus Silber oder einer Silberbasislegierung mit geringen Mengen eines erfindungsgemäß ausgewählten Zusatzes eine wesentliche Verbesserung der Eignung von Steckkontakten für Steckverbinder in 42V-Bordnetzen bewirken.
◆ Selbst dünne Schichten mit der erfindungsgemäß ausgewählten Zusammensetzung sind nach wiederholter Lichtbogenbeanspruchung noch vollständig vorhanden und reiben sich durch wiederholtes Ziehen und Stecken eines erfindungsgemäß ausgebildeten Steckers nicht ab.
◆ Überraschend ist ferner, dass sich auch bei wiederholter Lichtbogeneinwirkung eine Wanderung von Bestandteilen des Grundkörpers in die kontaktgebende Beschichtung in engen, tolerierbaren Grenzen hält und demgemäß ein Umlegieren nicht erfolgt. Das gilt sogar für Kupfer aus einem kupferhaltigen Grundkörper.
◆ Die dünne kontaktgebende Beschichtung ist für die Verwendung in Steckverbindern hinreichend hart.
◆ Da die Beschichtung dünn sein kann, sind die Kosten für die Verwendung des edlen Silbers niedrig.
◆ Die Beschichtung kann preiswert durch ein PVD-Verfahren abgeschieden werden, insbesondere durch Sputtern. Dadurch lassen sich Silber und Zusätze, die sich mit dem Silber nicht legieren, als ein feinkörniges, dichtes und hartes Gemenge abscheiden. Der Grundkörper bleibt im Verlauf des Abscheideverfahrens so kalt, dass er seine vorgewählte Härte nicht verliert.
◆ Durch ein reaktives PVD-Verfahren lassen sich auch Verbindungen, insbesondere Metalloxide, als Zusätze abscheiden.

Besonders gute Ergebnisse wurden mit Beschichtungen erzielt, die zwischen 0,5 µm und 5 µm dick sind.

Refraktäre Zusätze, welche sich fein verteilt in den Korngrenzen der Silbermatrix anreichern, eignen sich besonders für die Zwecke der Erfindung, namentlich Wolfram und Molybdän.

Für den Grundkörper können alle unedlen Legierungen verwendet werden, welche für elektrische Steckkontakte Stand der Technik sind. Insbesondere eignen sich die im Patentanspruch 3 namentlich genannten Werkstoffe.

Das Halbzeug ist vorzugsweise ein Band, welches in einem kontinuierlichen Prozeß fortlaufend beschichtet werden kann. Insbesondere kann das Halbzeug auch ein vorgestanztes Band sein, welches ebenfalls kontinuierlich beschichtet werden kann, vor allem durch ein trockenes und kaltes PVD-Verfahren. Werden vorgestanzte Bänder verwendet, in denen die Konturen der zu bildenden Steckkontakte durch das Vorstanzen bereits festgelegt sind, können daraus die Steckkontakte durch einen einfachen Trenn- und Biegevorgang wirtschaftlich geformt werden.

Die Beschichtung durch ein PVD-Verfahren, insbesondere durch Sputtern, abzuscheiden, hat den weiteren Vorteil, dass die Zusammensetzung der Beschichtung durch Verändern der Abscheidebedingungen verändert werden kann, sogar stufenlos während des Abscheidevorganges. So ist es möglich, in der Beschichtung einen Gradienten des sich mit Silber oder der Silberlegierung nicht legierenden Zusatzes vorzusehen und dadurch die mechanischen und elektrischen Eigenschaften der kontaktgebenden Beschichtung zu optimieren.

Die Konzentration des Zusatzes in der Beschichtung aus Silber oder der Silberlegierung an der Oberfläche der Beschichtung ist vorzusweise kleiner als in der Tiefe der Beschichtung. Das Verhältnis der Abscheiderate des Zusatzes zu der Abscheiderate des Silbers bzw. der Silberlegierung kann beispielsweise gegen Ende des Abscheidevorganges verkleinert werden.

Um die Zusammensetzung und damit die Eigenschaften der kontaktgebenden Beschichtung langfristig zu erhalten, kann es ferner vorteilhaft sein, zwischen dem Grundkörper und der kontaktgebenden Beschichtung eine Zwischenschicht vorzusehen, welche die Diffusion von Bestandteilen des Materials des Grundkörpers in die kontaktgebende Beschichtung und auf die Kontaktoberfläche hemmt. Eine solche Zwischenschicht kann zum Beispiel aus wenigen µm Nickel bestehen. Auch wenige µm Silber sind als Zwischenschicht geeignet. Silber kommt vor allem dann in Betracht, wenn ein erfindungsgemäßes Halbzeug mit so engen Biegeradien gebogen werden soll, dass eine Nickelschicht reißen würde. Besonders geeignet sind Schichtdicken von 1 µm bis 5 µm, insbesondere von 2 µm ± 0,5 µm, für die Zwischenschicht.

Um die Beständigkeit gegen Lichtbogeneinwirkung zu prüfen, wurden mehrere Steckkontakte aus Kupfer, welche durch Sputtern mit einer 2 µm dicken Beschichtung aus Silber mit 4 Gew.-% Wolfram versehen waren, 20mal bei einer Gleichspannung von 42 Volt unter einem Laststrom von 1,5 A und einer Induktivität von 1,75 mH getrennt. Nach 20 Trennvorgängen, in denen jeweils ein Lichtbogen gezündet wurde, war die Beschichtung auch im Bereich der Lichtbogenfußpunkte noch nicht abgebrannt, sondern noch vollständig und geschlossen vorhanden, wenn auch durch Aufschmelzvorgänge aufgerauht. Eine Analyse der Zusammensetzung der kontaktgebenden Beschichtung nach den 20 Lichtbogeneinwirkungen ergab einen geringen Kupferanteil von höchstens 1,5 Gew.-% im Bereich der Lichtbogenfußpunkte, was gut tolerierbar ist.

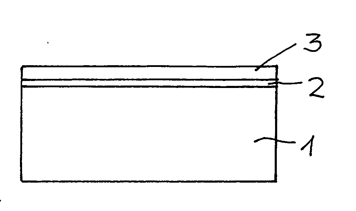

Die beigefügte Zeichnung ist ein Schnitt durch ein bandförmiges Halbzeug und zeigt - stark vergrößert und nicht maßstäblich - den Aufbau eines erfindungsgemäßen Halbzeuges mit einem beispielsweise 0,5 mm dicken Grundkörper 1 aus einer Federlegierung auf der Basis von Kupfer, zum Beispiel Kupfer mit 3 % Nikkel und 0,5 % Si (Werkstoff Nr. C7025 nach CDA) darüber als diffusionshemmende Zwischenschicht 2 eine 2 µm dicke Nickelschicht, welche galvanisch oder durch ein PVD-Verfahren abgeschieden sein kann. Auf der Nickelschicht 2 ist als kontaktgebende Schicht 3 eine 4 µm dicke Schicht aus Silber mit 5 Gew.-% Wolfram vorhanden, weiche gemeinsam aufgesputtert sind und ein feinteiliges Gemenge bilden.

Als Werkstoff für den Grundkörper ist beispielsweise ein Werkstoff aus der nachstehenden Gruppe ausgewählt:
(a) CuNiSi(X): zum Beispiel Werkstoffe mit den Bezeichnungen C7025, C7026 nach CDA
(b) CuFeP: zum Beispiel Werkstoffe mit der Bezeichnung C194, C19210 nach CDA
(c) CuSn: zum Beispiel Werkstoffe mit den Bezeichnungen C521, C511, C14415 nach CDA
(d) CuZn: zum Beispiel Werkstoffe mit den Bezeichnungen C272, C230, C260 nach CDA
(e) CuCrSiTi(X): zum Beispiel Werkstoffe mit den Bezeichnungen C18070, C18080, C18090 nach CDA
(f) CuNiSn: zum Beispiel Werkstoffe mit der Bezeichnung C72500, C19025 nach CDA
(g) CuSnZn: zum Beispiel Werkstoffe mit der Bezeichnung C663, C425 nach CDA
(h) CuN1Zn: zum Beispiel Werkstoffe mit den Bezeichnungen C75700, C77000, C76400 nach CDA
(i) CuBe: zum Beispiel Werkstoffe mit den Bezeichnungen C17100, C17410, C17200 nach CDA
(j) CuTi: zum Beispiel Werkstoffe aus der Werkstofffamilie mit der Bezeichnung C19900 nach CDA
(k) Edelstahl: zum Beispiel Werkstoffe mit den Bezeichnungen
   1.4310 nach DIN 17224,
   1.4311 nach DIN 17440,
   1.4406 nach DIN 17440,
   1.4428 nach DIN 17443,
   1.4429 nach DIN 17440,
   1.4568 nach DIN 17224,
   1.4841 nach DIN 17224,
   1.4318, 1.1231, 1.1248, 1.1269, 1.1274, 1.5029 nach DIN V 17006-100.

## Patentansprüche

1. Halbzeug für die Herstellung von Steckkontakten in Steckverbindern für elektrische Gleichstromnetze in Kraftfahrzeugen, die mit einer Nennspannung betrieben werden, bei welcher Lichtbögen entstehen können, mit einem elektrisch leitfähigen Grundkörper aus einem unedlen metallischen Werkstoff, welcher wenigstens teilweise eine kontaktgebende Beschichtung aus einem Material trägt, welches edler ist als das Material des Grundkörpers, wenigstens 0,3 µm dick ist und aus Silber oder aus einer Silberbasislegierung mit einem Zusatz besteht, welcher mit dem Silber bzw. mit der Silberbasislegierung keine Legierung oder allenfalls eine Ausscheidungslegierung bildet und einen höheren Schmelzpunkt als Silber hat, wobei die kontaktgebende Beschichtung als Zusatz Wolfram und/oder Molybdän enthält und durch ein PVD-Verfahren abgeschieden ist, **dadurch gekennzeichnet, dass** die Beschichtung aus Silber mit 4 bis 6 Vol-% Wolfram oder Molybdän besteht und eine Dicke von 0,5 µm bis 5 µm hat.

2. Halbzeug nach einem der vorstehenden Ansprüche, **dadurch gekennzeichnet, dass** die Beschichtung durch Sputtern abgeschieden ist.

3. Halbzeug nach einem der vorstehenden Ansprüche, **dadurch gekennzeichnet, dass** als Werkstoff für den Grundkörper ein Werkstoff aus der nachstehenden Gruppe ausgewählt ist:
(a) CuNiSi(X): zum Beispiel Werkstoffe mit den Bezeichnungen C7025, C7026 nach CDA
(b) CuFeP; zum Beispiel Werkstoffe mit der Bezeichnung C194, C19210 nach CDA
(c) CuSn: zum Beispiel Werkstoffe mit den Bezeichnungen C521, C511, C14415 nach CDA
(d) CuZn: zum Beispiel Werkstoffe mit den Bezeichnungen C272, C230, C260 nach CDA
(e) CuCrSiTi(X): zum Beispiel Werkstoffe mit den Bezeichnungen C18070, C18080, C18090 nach CDA
(f) CuNiSn: zum Beispiel Werkstoffe mit der Bezeichnung C72500, C19025 nach CDA
(g) CuSnZn: zum Beispiel Werkstoffe mit der Bezeichnung C663, C425 nach CDA
(h) CuNiZn: zum Beispiel Werkstoffe mit den Bezeichnungen C75700, C77000, C76400 nach CDA
(i) CuBe: zum Beispiel Werkstoffe mit den Bezeichnungen C17100, C17410, C17200 nach CDA
(j) CuTi: zum Beispiel Werkstoffe aus der Werkstofffamilie mit der Bezeichnung C19900 nach CDA
(k) Edelstahl: zum Beispiel Werkstoffe mit den Bezeichnungen
1.4310 nach DIN 17224,
1.4311 nach DIN 17440,
1.4406 nach DIN 17440,
1.4428 nach DIN 17443,
1.4429 nach DIN 17440,
1.4568 nach DIN 17224,
1.4841 nach DIN 17224,
1.4318, 1.1231, 1.1248, 1.1269, 1.1274, 1.5029 nach DIN V 17006-100.

4. Halbzeug nach einem der vorstehenden Ansprüche, **dadurch gekennzeichnet, dass** es ein Band ist.

5. Halbzeug nach Anspruch 4, **dadurch gekennzeichnet, dass** das Band vorgestanzt ist.

6. Halbzeug nach einem der vorstehenden Ansprüche, **dadurch gekennzeichnet, dass** zwischen dem Grundkörper und der kontaktgebenden Beschichtung eine diffusionshemmende Zwischenschicht vorgesehen ist.

7. Halbzeug nach Anspruch 6, **dadurch gekennzeichnet, dass** die Zwischenschicht aus Silber oder Nickel besteht.

8. Halbzeug aus einem der vorstehenden Ansprüche, **dadurch gekennzeichnet, dass** die Konzentration des Zusatzes in der Beschichtung aus Silber oder der Silberlegierung an der Oberfläche der Beschichtung kleiner ist als in der Tiefe der Beschichtung

9. Steckkontakte für elektrische Steckverbinder, hergestellt aus einem Halbzeug nach einem der vorstehenden Ansprüche.

10. Die Verwendung von Steckkontakten nach Anspruch 9 in elektrischen Gleichstromnetzen von Automobilen, die mit einer Nennspannung betrieben werden, bei welcher Lichtbögen entstehen können, insbesondere in 42 Volt-Gleichstromnetzen.

11. Verfahren zum Herstellen eines Halbzeuges nach einem der Ansprüche 1 bis 8 durch PVD-Beschichten eines Bandes aus einem unedlen metallischen Werkstoff mit Silber oder mit einer Silberbasislegierung und mit einem Zusatz von Wolfram und/oder Molybdän, wobei die Bestandteile der Beschichtung zeitlich überlappend abgeschieden werden und die Beschichtung aus Silber mit 4 bis 6 Vol-% Wolfram oder Molybdän besteht und eine Dicke von 0,5 µm bis 5 µm hat.

12. Verfahren nach Anspruch 11, **dadurch gekennzeichnet, dass** das Verhältnis der Abscheideraten der Bestandteile der Beschichtung während des Abscheidevorganges verändert wird.

13. Verfahren nach Anspruch 12, **dadurch gekennzeichnet, dass** das Verhältnis der Abscheiderate des Zusatzes zu der Abscheiderate des Silbers bzw. der Silberlegierung gegen Ende des Abscheidevorganges verkleinert wird.

## Claims

1. Semi-finished product for making plug-in contacts in plug-in connectors for electric DC power systems in motor vehicles which are operated at a nominal voltage at which electric arcing may occur, having an electrically conductive main body made of a non-precious metallic material that carries, at least in part, a contact-making coating of a material more precious than the material of the main body, said coating being at least 0.3 µm thick and consisting of silver or of a silver-based alloy with an addition that will not form an alloy with silver or with the silver-based alloy, or will at best form a precipitation alloy, and which has a higher melting point than silver, wherein the coating contains tungsten and/or molybdenum and was deposited by a PVD process, **characterized in that** the coating consists of silver with a tungsten or molybdenum content of 4 to 6 % by volume and has a thickness of 0.5 µm to 5 µm.

2. The semi-finished product as defined in any of the preceding claims, **characterized in that** the coating is deposited by sputtering.

3. The semi-finished product as defined in any of the preceding claims, **characterized in that** a material from the following group is selected as material for the main body:
(a) CuNiSi(X): Materials designated C7025, C7026 according to CDA, for example;
(b) CuFeP: Materials designated C194, C19210 according to CDA, for example;
(c) CuSn: Materials designated C521, C511, C14415, according to CDA, for example;
(d) CuZn: Materials designated C272, C230, C260 according to CDA, for example;
(e) CuCrSiTi(X): Materials designated C18070, C18080, C18090 according to CDA, for example;
(f) CuNiSn: Materials designated C72500, C19025 according to CDA, for example;
(g) CuSnZn: Materials designated C663, C425 according to CDA, for example;
(h) CuNiZn: Materials designated C75700, C77000, C76400 according to CDA, for example;
(i) CuBe: Materials designated C17100, C17410, C17200 according to CDA, for example;
(j) CuTi: Materials from the family of materials designated C19900 according to CDA, for example,
(k) Stainless steel: Materials designated
1.4310 according to DIN 17224,
1.4311 according to DIN 17440,
1.4406 according to DIN 17440,
1.4428 according to DIN 17443,
1.4429 according to DIN 17440,
1.4568 according to DIN 17224,
1.4841 according to DIN 17224,
1.4318, 1.1231, 1.1248, 1.1269, 1.1274, 1.5029 according to DIN V 17006-100.

4. The semi-finished product as defined in any of the preceding claims, **characterized in that** the product is a strip.

5. The semi-finished product as defined in Claim 4, **characterized in that** the strip is pre-punched.

6. The semi-finished product as defined in any of the preceding claims, **characterized in that** a diffusion-inhibiting intermediate layer is provided between the main body and the contact-making coating.

7. The semi-finished product as defined in Claim 16, **characterized in that** the intermediate layer consists of silver or nickel.

8. The semi-finished product as defined in any of the preceding claims, **characterized in that** the concentration of the addition in the silver or silver-alloy coating is lower at the surface of the coating than in the deeper region of the coating.

9. Plug-in contacts for electric plug-in connectors made from a semi-finished product according to any of the preceding claims.

10. The use of plug-in contacts as defined in Claim 9 in electric power systems of automobiles, which are operated at a nominal voltage at which arcing may occur, especially in 42 Volt DC power systems.

11. Method for making a semi-finished product as defined in any of Claims 1 to 8 by PVD coating of a strip, consisting of a non-precious metallic material, with silver or a silver-based alloy and with an addition of tungsten and/or molybdenum, wherein the components of the coating are deposited in a fashion overlapping in time and wherein the coating consists of silver with a tungsten or molybdenum content of 4 to 6 % by volume and has a thickness of 0.5 µm to 5 µm..

12. The method as defined in Claim 11, **characterized in that** the ratio of the deposition rates of the components of the coating is altered during the deposition process.

13. The method as defined in Claim 12, **characterized in that** the ratio between the separation rate of the addition and the separation rate of the silver or the silver alloy is reduced toward the end of the separation process.

## Revendications

1. Produit semi-fini pour la fabrication de contacts embrochables dans des connecteurs pour des réseaux électriques à courant continu dans des véhicules automobiles, qui fonctionnent avec une tension nominale dans laquelle des arcs électriques peuvent se produire, comprenant un corps de base électroconducteur constitué d'un matériau en métal non noble, qui porte au moins en partie un revêtement faisant contact constitué d'une matière qui est plus noble que la matière du corps de base, qui possède une épaisseur minimale de 0,3 µm et qui est constitué d'argent ou d'un alliage à base d'argent avec un additif qui ne forme pas d'alliage avec l'argent, respectivement avec l'alliage à base d'argent ou qui forme à la rigueur un alliage de précipitation, et qui possède un point de fusion supérieur à celui de l'argent, le revêtement faisant contact contenant, à titre d'additif, du tungstène et/ou du molybdène et étant déposé via un procédé de dépôt physique en phase gazeuse, **caractérisé en ce que** le revêtement est constitué d'argent comprenant du tungstène ou du molybdène à concurrence de 4 à 6 % en volume, et possède une épaisseur de 0,5 µm à 5 µm.

2. Produit semi-fini selon l'une quelconque des revendications précédentes, **caractérisé en ce que** le revêtement est déposé par pulvérisation cathodique.

3. Produit semi-fini selon l'une quelconque revendications précédentes, **caractérisé en ce qu'**on sélectionne, comme matériau pour le corps de base, un matériau choisi parmi le groupe suivant :
(a) CuNiSi(X) : par exemple des matériaux connus sous les dénominations C7025, C7026 selon la norme CDA
(b) CuFeP : par exemple des matériaux connus sous les dénominations C194, C19210 selon la norme CDA
(c) CuSn : par exemple des matériaux connus sous les dénominations C521, C511, C14415 selon la norme CDA
(d) CuZn : par exemple des matériaux connus sous les dénominations C272, C230, C260 selon la norme CDA
(e) CuCrSiTi(X) : par exemple des matériaux connus sous les dénominations C18070, C18080, C18090 selon la norme CDA
(f) CuNiSn : par exemple des matériaux connus sous les dénominations C72500, C19025 selon la norme CDA
(g) CuSnZn : par exemple des matériaux connus sous les dénominations C663, C425 selon la norme CDA
(h) CuNiZn : par exemple des matériaux connus sous les dénominations C75700, C77000, C76400 selon la norme CDA
(i) CuBe : par exemple des matériaux connus sous les dénominations C17100, C17410, C17200 selon la norme CDA
(j) CuTi : par exemple des matériaux de la famille des matériaux connue sous la dénomination C19900 selon la norme CDA
(k) de l'acier spécial : par exemple des matériaux connus sous les dénominations
1.4310 selon la norme DIN 17224,
1.4311 selon la norme DIN 17440,
1.4406 selon la norme DIN 17440,
1.4428 selon la norme DIN 17443,
1.4429 selon la norme DIN 17440,
1.4568 selon la norme DIN 17224,
1.4841 selon la norme DIN 17224,
1.4318, 1.1231, 1.1248, 1.1269, 1.1274, 1.5029 selon la norme DIN V 17006-100.

4. Produit semi-fini selon l'une quelconque des revendications précédentes, **caractérisé en ce qu'**il s'agit d'un ruban.

5. Produit semi-fini selon la revendication 4, **caractérisé en ce que** le ruban est découpé au préalable.

6. Produit semi-fini selon l'une quelconque des revendications précédentes, **caractérisé en ce que,** entre le corps de base et le revêtement faisant contact, on prévoit une couche intermédiaire empêchant la diffusion.

7. Produit semi-fini selon la revendication 6, **caractérisé en ce que** la couche intermédiaire est constituée d'argent ou de nickel.

8. Produit semi-fini selon l'une quelconque des revendications précédentes, **caractérisé en ce que** la concentration de l'additif dans le revêtement constitué d'argent ou de l'alliage à base d'argent à la surface du revêtement est inférieure à celle en vigueur dans la profondeur du revêtement.

9. Contacts embrochables pour des connecteurs électriques, fabriqués à partir d'un produit semi-fini selon l'une quelconque des revendications précédentes.

10. Utilisation de contacts embrochables selon la revendication 9, dans des réseaux électriques de véhicules automobiles à courant continu, qui fonctionnent avec une tension nominale dans laquelle des arcs électriques peuvent se produire, en particulier dans des réseaux à courant continu de 42 V.

11. Procédé pour la fabrication d'un produit semi-fini selon l'une quelconque des revendications 1 à 8, par enduction d'un ruban via un procédé de dépôt physique en phase gazeuse, constitué d'un matériau en métal non noble comprenant de l'argent ou un alliage à base d'argent et un additif de tungstène et/ou de molybdène, les constituants du revêtement étant déposés de façon à se chevaucher dans le temps, et le revêtement étant constitué d'argent comprenant du tungstène ou du molybdène à concurrence de 4 à 6 % en volume et possédant une épaisseur de 0,5 µm à 5 µm.

12. Procédé selon la revendication 11, **caractérisé en ce que** le rapport des vitesses de précipitation des constituants du revêtement subit des modifications au cours du processus de précipitation.

13. Procédé selon la revendication 12, **caractérisé en ce que** le rapport des vitesses de précipitation de l'additif aux vitesses de précipitation de l'argent respectivement de l'alliage à base d'argent est réduit lorsqu'on s'approche de la fin du processus de précipitation.
